# EUROPÄISCHE PATENTSCHRIFT

(11) **EP 1 950 476 B1**
(45) Veröffentlichungstag und Bekanntmachung des Hinweises auf die Patenterteilung: **01.08.2018**
(21) Anmeldenummer: 07405277.0
(22) Anmeldetag: 14.09.2007
(51) Int. Cl.: F16K 31/00

(54) **Ventilantrieb**
Valve actuator
Dispositif d'actionnement

(30) Priorität: 20.09.2006 CH 14982006
(43) Veröffentlichungstag der Anmeldung: 30.07.2008
(73) Patentinhaber: Fr. Sauter AG, 4016 Basel (CH)
(72) Erfinder: Schadt, Stephan, 4051 Basel (CH); Kernen, Roland, 4127 Birsfelden (CH); Köhler, Ivo, 4057 Basel (CH)
(74) Vertreter: Bohest AG

(56) Entgegenhaltungen:
- EP-A1- 0 763 681
- WO-A-94/29778
- DE-A1- 3 529 614
- DE-C1- 4 032 285

## Beschreibung

### Technisches Gebiet

Die Erfindung betrifft einen Ventilantrieb gemäss dem Oberbegriff des unabhängigen Patentanspruchs 1.

Solche Ventilantriebe mit einem Hubelement, einem auf das Hubelement wirkenden Druckelement und einem Aktor, wobei das Hubelement mittels des Aktors in eine Hubrichtung bewegbar ist und wobei das Druckelement so angeordnet ist, dass eine Kraft entgegen der Hubrichtung auf das Hubelement wirkt, können zum Betätigen eines Ventils mit einer entlang seiner Längsachse bewegbaren Betätigungsspindel eingesetzt werden.

### Stand der Technik

In verschiedenen technischen Gebieten, wie beispielsweise in der Heizungs-, Klima- und Lüftungstechnik, werden Ventile und Verteiler für die Durchflussregelung eingesetzt. Im folgenden sind hier bei einer Erwähnung von Ventilen jeweils Verteiler ebenfalls mitumfasst. Solche Ventile weisen häufig eine aus einem Gehäuse ragende Betätigungsspindel auf, die in Richtung seiner Längsachse über eine bestimmte Strecke bewegbar ist. Die Betätigungsspindel ist dabei mit einem Verschlussorgan verbunden, wie beispielsweise einem neben einer Durchflussöffnung angeordneten Teller, der die Durchflussöffnung dicht abschliesst, wenn er an ihr anliegt. Weiter wirkt an der Betätigungsspindel eine Rückstellfeder, mit welcher die Betätigungsspindel in einer Normalstellung, in der keine Kraft von aussen auf die Betätigungsspindel wirkt, aus dem Gehäuse gedrückt wird. Typischerweise sind die Ventile so ausgestaltet, dass sie in dieser Normalstellung entweder geschlossen oder geöffnet sind. Zur Betätigung eines solches Ventils wird die Betätigungsspindel entgegen der Federkraft der Rückstellfeder in das Gehäuse gedrückt und damit das Verschlussorgan so bewegt, dass das Ventil geöffnet beziehungsweise geschlossen wird.

Zum automatisierten Betätigen solcher Ventile werden heute verschiedene Ausführungen von Ventilantrieben eingesetzt. Gattungsbildende Ventilantriebe sind aus der DE 35 29 614 A1 bekannt. Beispielsweise wird auch in der DE 197 48 973 A1 ein solcher Ventilantrieb beschrieben, der eine Druckfeder, einen Käfig, ein thermisches Dehnelement und einen mit dem thermischen Dehnelement verbundenen Heizwiderstand umfasst. Der Ventilantrieb ist so ausgestaltet, dass ein Kolben aus dem Dehnelement ausfährt, wenn der Heizwiderstand mit Strom beaufschlagt wird, und dass der Käfig dabei durch den Kolben in eine Hubrichtung bewegt wird. Die Druckfeder drückt den Käfig entgegen der Hubrichtung, so dass der Kolben die Federkraft der Druckfeder überwinden muss, um den Käfig zu bewegen. In montiertem Zustand liegt eine Auflagefläche des Ventilantriebs an einer Auflagefläche eines Gehäuses des Ventils an und der Käfig liegt am Längsende der Betätigungsspindel an. Die Federkraft der Druckfeder ist dabei grösser ausgelegt als die Federkraft der Rückstellfeder des Ventils, so dass der Käfig die Betätigungsspindel in das Gehäuse des Ventils drückt, wenn das Dehnelement nicht beheizt wird. Zur Betätigung des Ventils wird der Heizwiderstand mit Strom beaufschlagt, so dass er das Dehnelement erwärmt. Dadurch wird der Kolben des Dehnelements ausgefahren und der Käfig wird in Hubrichtung vom Ventil wegbewegt. Gleichzeitig wird die Betätigungsspindel durch die Federkraft der Rückstellfeder wieder aus dem Gehäuse gedrückt bis sich das Ventil in seiner Normalstellung befindet.

Ventile der oben beschriebenen Art werden heute in zahlreichen verschiedenen Ausführungen vertrieben. Für die Ausgestaltung entsprechender Ventilantriebe ist dabei unter anderem problematisch, dass die Schliessmasse der Ventile nicht normiert sind. Unter Schliessmass wird hier der Abstand zwischen dem aus dem Gehäuse ragenden Längsende der Betätigungsspindel und der Auflagefläche des Gehäuses, an der der Ventilantrieb in montiertem Zustand anliegt, verstanden. Wird ein Ventilantrieb verwendet, der nicht auf das Schliessmass des entsprechenden Ventils angepasst ist, kann mit dem Ventilantrieb beispielweise die Betätigungsspindel nicht über seine ganze Betätigungsstrecke bewegt werden und/oder der Ventilantrieb bewegt sich massgeblich in einem Bereich, in dem die Betätigungsspindel nicht bewegt wird (Leerhub). Um einen optimalen Betrieb des Ventils mittels eines Ventilantriebs gewährleisten zu können, werden die Ventilantriebe heute teilweise auf einzelne Ventiltypen angepasst, was einen erheblichen Aufwand bei der Produktion, beim Vertrieb und bei der Logistik von Ventilantrieben für verschiedene Ventile nach sich zieht.

Wie beispielsweise in der DE 299 05 078 U beschrieben, wird diesem Problem heute begegnet, indem Ventilantriebe jeweils ein Antriebsteil und ein Adapter umfassend ausgestaltet werden. Dabei sind die Antriebsteile universell und die Adapter jeweils einer spezifischen Ausgestaltung eines Ventils angepasst ausgestaltet, so dass ein einziges Antriebsteil über verschiedene Adapter auf verschiedene Typen von Ventilen montierbar ist und gleichzeitig ein optimaler Betrieb dieser verschiedenen Typen von Ventilen gewährleistet werden kann. Ein Nachteil solcher zweiteilig ausgestalteter Ventilantriebe ist, dass die Adapter auf einzelne Ventiltypen angepasst werden müssen, was einen Aufwand bei der Produktion, beim Vertrieb und bei der Logistik von Ventilantrieben für verschiedene Ventile nach sich zieht. Ausserdem kann es bei der Montage zu Verwechslungen der Adapter kommen, so dass nur ein ungenügender Betrieb des Ventils ermöglicht wird oder dass ein Betrieb des Ventils ganz verunmöglicht wird.

Aufgabe der nachfolgenden Erfindung ist es daher, einen Ventilantrieb vorzuschlagen, mit dem verschiedene Typen von Ventilen optimiert betätigt werden können und der einfach und sicher auf verschiedenen Typen von Ventilen montierbar ist.

### Darstellung der Erfindung

Die Aufgabe wird erfindungsgemäss durch einen Ventilantrieb gelöst, wie er im unabhängigen Patentanspruch 1 definiert ist. Vorteilhafte Ausführungsvarianten des erfindungsgemässen Ventilantriebs ergeben sich aus den abhängigen Patentansprüchen.

Das Wesen der Erfindung besteht im Folgenden: Ein Ventilantrieb zum Betätigen eines Ventils mit einer entlang seiner Längsachse bewegbaren Betätigungsspindel, umfasst ein mit der Betätigungsspindel wirkungsmässig verbindbares Hubelement, ein auf das Hubelement wirkendes Druckelement und einen Aktor. Das Hubelement ist dabei mittels des Aktors in eine Hubrichtung bewegbar und das Druckelement ist dabei so angeordnet, dass eine Kraft entgegen der Hubrichtung auf das Hubelement wirkt. Weiter umfasst das Hubelement ein mit der Betätigungsspindel wirkungsmässig verbindbares Ausgleichsteil und ein mit dem Aktor wirkungsmässig verbindbares Hubteil, wobei das Ausgleichsteil und das Hubteil über Verriegelungsmittel an in Hubrichtung verschiedenen Positionen zueinander miteinander verriegelbar und voneinander entriegelbar sind. Das Ausgleichssteil kann im Betrieb somit an einer bevorzugten Position im Verhältnis zum Hubteil mit dem Hubteil verriegelt sein. Somit kann insbesondere der auf einem Ventil montierte Ventilantrieb exakt auf das Schliessmass des Ventils angepasst werden, so dass ein einwandfreier Betrieb des Ventils und eine verhältnismässig lange Lebensdauer des Ventilantriebs, beispielsweise durch eine Verhinderung von Leerhub, gewährleistet werden kann. Wird der Ventilantrieb auf einem anderen Typ von Ventil mit einem anderen Schliessmass montiert, kann das Betätigungsteil an einer anderen Position im Verhältnis zum Hubteil mit dem Hubteil verriegelt sein, so dass auch ein einwandfreier Betrieb des anderen Typs von Ventil gewährleistet werden kann. Beispielsweise ist das Ausgleichssteil im Betrieb des Ventilantriebs auf einem Ventil mit einem verhältnismässig grossen Schliessmass vorzugsweise im Bezug auf das Hubteil verhältnismässig weit in Hubrichtung verschoben mit dem Hubteil verriegelt. Demgegenüber ist beispielsweise das Ausgleichssteil im Betrieb des Ventilantriebs auf einem Ventil mit einem verhältnismässig kleinen Schliessmass vorzugsweise im Bezug auf das Hubteil verhältnismässig weit entgegen der Hubrichtung verschoben mit dem Hubteil verriegelt. Die Anpassung eines solchen Ventilantriebs auf ein bestimmtes Schliessmass eines Typs von Ventil kann wiederholt werden, so dass ein einziger Ventilantrieb auf mehreren Ventilen verschiedenen Typs eingesetzt werden kann. Bei der Montage des Ventilantriebs können keine schliessmassspezifischen Fehler gemacht werden, so dass die Montage des Ventilantrieb verhältnismässig sicher ist.

Vorzugsweise umschliesst das Hubteil das Ausgleichsteil mindestens teilweise, so dass das Ausgleichsteil im Hubteil bewegbar ist, wenn das Ausgleichsteil und das Hubteil voneinander entriegelt sind. Mit einem so ausgestalten Hubelement können die Verriegelungsmittel auf einfache Weise ausgestaltet sein und eine kompakte Konstruktion des Ventilantriebs wird ermöglicht.

Die Verriegelungsmittel umfassen dabei mit Vorteil an einer Aussenseite des Ausgleichsteils angeordnete Aussenzähne und an einer Innenseite des Hubteils angeordnete Innenzähne, wobei die Aussenzähne und die Innenzähne ineinander greifen, wenn das Ausgleichsteil und das Hubteil miteinander verriegelt sind. Mittels so ineinander greifenden Aussenzähne und Innenzähne kann auf einfache Weise eine effektive Verriegelung ausgestaltet werden, die eine Verriegelung des Ausgleichsteils und des Hubteils an in Hubrichtung verschiedenen Positionen zueinander ermöglicht.

Vorzugsweise umfassen die Verriegelungsmittel eine Betätigungseinheit zum Betätigen der Verriegelung. Diese Betätigungseinheit kann beispielsweise manuell bedienbar sein, so dass das Ausgleichsteil und das Hubteil manuell miteinander verriegelbar und voneinander entriegelbar sind. Mittels einer solchen Betätigungseinheit kann das Ausgleichsteil und das Hubteil miteinander verriegelt werden, wenn der Ventilantrieb auf ein Ventil aufgesetzt ist und das Ausgleichsteil entsprechend des Schliessmasses des Ventils in Hubrichtung bewegt ist.

Dabei weist die Aussenseite des Ausgleichsteils vorzugsweise in Umfangrichtung alternierend zueinander angeordnete Bereiche mit den - Aussenzähnen und Bereiche ohne die Aussenzähne auf und die Innenseite des Hubteils in Umfangrichtung alternierend zueinander angeordnete Bereiche mit den Innenzähnen und Bereiche ohne die Innenzähne. Das Hubteil und das Ausgleichsteil sind dabei über die Betätigungseinheit von einer entriegelten Stellung, in der die Aussenzähne benachbart zu den Bereichen ohne die Innenzähne und die Innenzähne benachbart zu den Bereichen ohne die Aussenzähne liegen, zu einer verriegelten Stellung, in der die Aussenzähne und die Innenzähne ineinander greifen, zueinander bewegbar. Auf diese Weise kann die Verriegelung einfach und effektiv ausgestaltet werden, indem beispielsweise das Hubteil im Verhältnis zum Ausgleichsteil mittels der Betätigungseinheit von der verriegelten Stellung in die entriegelte Stellung und umgekehrt verdreht werden kann. Dabei sind das Ausgleichsteil und das Hubteil vorzugsweise im Wesentlichen zylinderförmig ausgestalten, was ein einfaches Verdrehen zueinander ermöglicht.

Mit Vorteil umfasst der Ventilantrieb eine Vorspanneinrichtung, mit der das Hubelement in Hubrichtung entgegen der Kraft des Druckelements bewegbar ist, wobei die Vorspanneinrichtung ein Fixierelement aufweist, mittels dem das Hubelement in einer Stellung fixierbar ist, in der das Druckelement vorgespannt ist. Idealerweise ist das Hubelement vor der Montage des Ventilantriebs auf einem Ventil in dieser Stellung fixiert und das Ausgleichsteil ist vom Hubteil entriegelt. Beim Aufsetzen des Ventilantrieb auf das Ventil kann so das Ausgleichsteil durch die Betätigungsspindel des Ventils in Hubrichtung im Verhältnis zum Hubteil bewegt werden, bis der Ventilantrieb vollständig auf das Ventil aufgesetzt und das Schliessmass des Ventils durch das Hubelement aufgenommen ist. In dieser Stellung kann nun das Ausgleichsteil mit dem Hubteil verriegelt werden und danach die Vorspanneinrichtung aus der erwähnten Stellung gelöst, so dass das Druckelement über das Hubelement auf die Betätigungsspindel drückt und diese somit in das Ventil hineindrückt. Der Ventilantrieb befindet sich nach einer solchen Montage in betriebsbereitem Zustand.

Vorzugsweise ist die Vorspanneinrichtung so ausgestaltet, dass sie manuell betätigbar ist. Dadurch kann der Ventilantrieb im Betrieb auch durch manuelles Bewegen des Hubelements in Hubrichtung mittels der Vorspanneinrichtung betrieben werden, was unter anderem beispielsweise bei einem Ausfall des Aktors nützlich sein kann. Beispielsweise kann die Vorspanneinrichtung eine um das Hubelement drehbare Kulisse umfassen, wobei die Kulisse eine schräge Gleitfläche aufweist, die an einem Vorsprung des Hubelements angreift. Durch ein Drehen der Kulisse um das Hubelement herum wird der Vorsprung entlang der Gleitfläche verschoben und das Hubelement wird in Hubrichtung oder entgegen der Hubrichtung bewegt. Die schräge Fläche kann weiter in eine horizontal zur Hubrichtung angeordnete Fixierfläche übergehen. Wird die Kulisse soweit gedreht, bis der Vorsprung des Hubelements auf der Fixierfläche liegt, so drückt das Druckelement den Vorsprung so auf die Fixierfläche, dass das Hubelement in dieser Position fixiert und das Druckelement vorgespannt ist.

In einer ersten bevorzugten Ausführungsvariante des Ventilantriebs ist das Druckelement wirkungsmässig mit dem Hubteil verbunden. Der Ventilantrieb weist dabei ein weiteres Druckelement auf, das wirkungsmässig mit dem Ausgleichteil verbunden ist, wobei das weitere Druckelement so angeordnet ist, dass eine Kraft entgegen der Hubrichtung auf das Ausgleichteil wirkt. Mit einem solchen weiteren Druckelement kann gewährleistet werden, dass das Ausgleichsteil immer maximal weit entgegen der Hubrichtung bewegt ist, wenn das Ausgleichsteil und das Hubteil voneinander entriegelt sind. Dabei kann das weitere Druckelement insbesondere so ausgestaltet sein, dass seine Druckkraft, die auf das Ausgleichsteil wirkt, nicht ausreicht um die Betätigungsspindel in das Ventil zu drücken. Beim Aufsetzen des Ventilantriebs auf ein Ventil kann somit gewährleistet werden, dass das Ausgleichsteil maximal in Hubrichtung bewegt an der Betätigungsspindel anliegt, ohne dass diese betätigt wird. Vorzugsweise ist bei dieser Ausführungsvariante das Ausgleichsteil auf der der Betätigungsspindel des Ventils zugewandten Seite des Aktors angeordnet, womit der Ventilantrieb sehr kompakt ausgestaltet sein kann.

In einer zweiten bevorzugten Ausführungsvariante des Ventilantriebs ist das Druckelement wirkungsmässig mit dem Ausgleichteil verbunden. Der Ventilantrieb weist dabei ein weiteres Druckelement auf, das wirkungsmässig mit dem Hubteil verbunden ist, wobei das weitere Druckelement so angeordnet ist, dass eine Kraft entgegen der Hubrichtung auf das Hubteil wirkt. Mit einem solchen weiteren Druckelement kann gewährleistet werden, dass das Hubteil immer maximal weit entgegen der Hubrichtung bewegt ist, wenn das Hubteil und das Ausgleichsteil voneinander entriegelt sind. Dabei kann das weitere Druckelement insbesondere so ausgestaltet sein, dass seine Druckkraft, die auf das Hubteil wirkt, nicht ausreicht um die Betätigungsspindel in das Ventil zu drücken. Beim Aufsetzen des Ventilantriebs auf ein Ventil kann somit gewährleistet werden, dass das Hubteil maximal in Hubrichtung bewegt an der Betätigungsspindel anliegt, ohne dass diese betätigt wird. Vorzugsweise ist bei dieser Ausführungsvariante das Hubteil im Wesentlichen auf der der Betätigungsspindel des Ventils zugewandten Seite des Aktors angeordnet, womit der Ventilantrieb einfach ausgestaltet sein kann.

Der Ventilantrieb kann ein Gehäuse mit einer Öffnung oder einem Fenster aufweisen, mittels derer bzw. mittels dessen die Stellung des Hubelements von ausserhalb des Gehäuses sichtbar ist. Dies ermöglicht einem Benutzer des Ventilantriebs dessen Betriebszustand einfach zu erkennen.

Vorzugsweise ist dabei das Gehäuse mittels Zweikomponentenspritzverfahren aus einem transparenten Kunststoff und einem untransparenten Kunststoff hergestellt, wobei das Fenster durch den transparenten Kunststoff gebildet ist. Dies ermöglicht eine einfache und effiziente Herstellung des Gehäuses mit einem Fenster, wobei die Stellung des Hubelements von ausserhalb des Gehäuses durch das Fenster ersichtlich ist.

### Kurze Beschreibung der Zeichnungen

Weitere vorteilhafte Ausgestaltungen der Erfindung ergeben sich aus der nachfolgenden Beschreibung von Ausführungsbeispielen der Erfindung mit Hilfe der schematischen Zeichnung.

Es zeigen:
Fig. 1 eine perspektivische Ansicht eines ersten Ausführungsbeispiels des erfindungsgemässen Ventilantriebs in einer Ausgangsstellung,
Fig. 2 einen Querschnitt durch den Ventilantrieb von Fig. 1;
Fig. 3 eine perspektivische Explosionsansicht einiger für den Schliessmassausgleich wesentlicher Teile des Ventilantriebs von Fig. 1,
Fig. 4 eine perspektivische Ansicht des Ventilantriebs von Fig. 1 in einer vorgespannten Stellung,
Fig. 5 einen Querschnitt durch den Ventilantrieb von Fig. 4 mit einem Anschlussteil eines Ventils,
Fig. 6 eine perspektivische Ansicht des Ventilantriebs von Fig. 1 in einer unverriegelten aufgesetzten Stellung,
Fig. 7 einen Querschnitt durch den Ventilantrieb von Fig. 6 mit dem Anschlussteil des Ventils,
Fig. 8 eine perspektivische Ansicht des Ventilantriebs von Fig. 1 in einer verriegelten aufgesetzten Stellung,
Fig. 9 einen Querschnitt durch den Ventilantrieb von Fig. 8 mit dem Anschlussteil des Ventils,
Fig. 10 eine perspektivische Ansicht des Ventilantriebs von Fig. 1 in einer Betriebsstellung mit aktiviertem thermischen Antrieb,
Fig. 11 einen Querschnitt durch den Ventilantrieb von Fig. 10,
Fig. 12 eine perspektivische Ansicht des Ventilantriebs von Fig. 1 in einer Betriebsstellung mit unaktiviertem thermischen Antrieb,
Fig. 13 einen Querschnitt durch den Ventilantrieb von Fig. 12,
Fig. 14 eine perspektivische Ansicht eines zweiten Ausführungsbeispiels des erfindungsgemässen Ventilantriebs in einer Ausgangsstellung,
Fig. 15 eine seitliche Ansicht des Ventilantriebs von Fig. 14 ohne Kulisse und ohne Drehfeder,
Fig. 16 eine perspektivische Explosionsansicht einiger für den Schliessmassausgleich wesentlicher Teile des Ventilantriebs von Fig. 14,
Fig. 17 einen Querschnitt durch den Ventilantrieb von Fig. 14,
Fig. 18 eine perspektivische Ansicht des Ventilantriebs von Fig. 14 in einer vorgespannten Stellung,
Fig. 19 eine seitliche Ansicht des Ventilantriebs von Fig. 18 ohne Kulisse und ohne Drehfeder,
Fig. 20 einen Querschnitt durch den Ventilantrieb von Fig. 18,
Fig. 21 eine perspektivische Ansicht des Ventilantriebs von Fig. 14 in einer Auslösstellung,
Fig. 22 eine seitliche Ansicht des Ventilantriebs von Fig. 21 ohne Kulisse und ohne Drehfeder,
Fig. 23 einen Querschnitt durch den Ventilantrieb von Fig. 21,
Fig. 24 eine perspektivische Ansicht des Ventilantriebs von Fig. 14 in einer Kompensationsstellung,
Fig. 25 eine seitliche Ansicht des Ventilantriebs von Fig. 24 ohne Kulisse und ohne Drehfeder,
Fig. 26 einen Querschnitt durch den Ventilantrieb von Fig. 24,
Fig. 27 eine perspektivische Ansicht des Ventilantriebs von Fig. 14 in einer Betriebsstellung,
Fig. 28 eine seitliche Ansicht des Ventilantriebs von Fig. 27 ohne Kulisse und ohne Drehfeder, und
Fig. 29 einen Querschnitt durch den Ventilantrieb von Fig. 27. **Weg(e) zur Ausführung der Erfindung**

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen" und "nach aussen" bezeichnen Richtungen hin zum oder weg vom geometrischen Mittelpunkt des Ventilantriebs sowie benannter Teile desselben. Die Terminologie umfasst die oben ausdrücklich erwähnten Wörter, Ableitungen von denselben und Wörter ähnlicher Bedeutung.

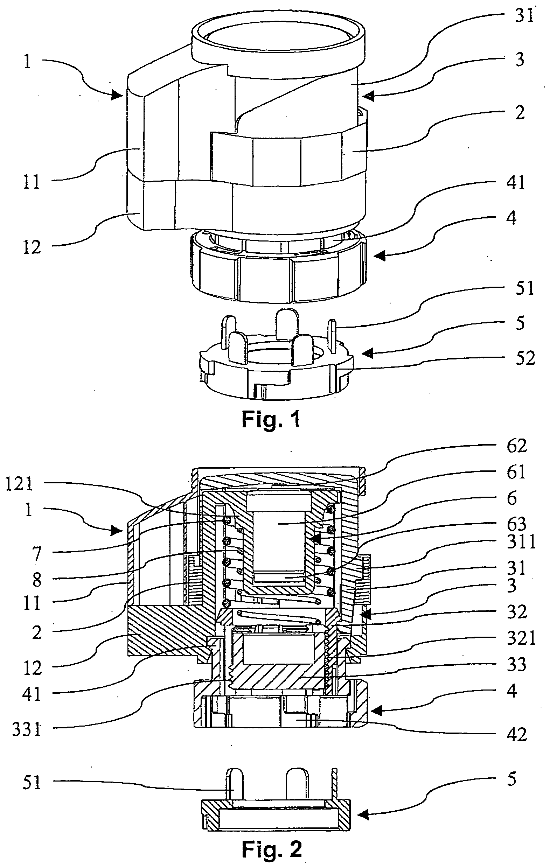

Fig. 1 zeigt eine perspektivische Ansicht eines ersten Ausführungsbeispiels des erfindungsgemässen Ventilantriebs, der ein Gehäuse 1 mit einem Deckel 11 und einer Antriebsaufnahme 12 umfasst. Das Gehäuse 1 ist im Wesentlichen zylindrisch ausgestaltet und weist auf seiner linken Seite eine Ausbuchtung auf. Der Deckel 11 ist im Wesentlichen hohlzylindrischen ausgestaltet, wobei er auf seiner rechten Seite und nach oben hin jeweils eine Öffnung aufweist. Im Hohlraum des Gehäuses 1 ist ein Hubelement 3 mit einer Hubkappe 31 angeordnet. Zwischen dem Deckel 11 und der Antriebsaufnahme 12 weist der Ventilantrieb eine um die Hubkappe 31 drehbare Kulisse 2 auf. Nach unten schliesst ein Bajonettring 4 an das Gehäuse 1 an, der über Schnappelemente 41 mit der Antriebsaufnahme 12 verbunden ist. In der in Fig. 1 gezeigten Ausgangsstellung, in der der Ventilantrieb beispielsweise vertrieben werden kann, umfasst der Ventilantrieb weiter einen vom Gehäuse 1 losgelösten im Wesentlichen ringförmigen Adapter 5, der an seiner Aussenseite mehrere L-förmige Vorsprünge 52 und an seinem oberen Rand angeordnete sich in Richtung des Gehäuses 1 erstreckende Schwerter 51 aufweist.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen.

In **Fig. 2** ist der Ventilantrieb von Fig. 1 in der Ausgangsstellung im Querschnitt gezeigt. Darin ist ersichtlich, dass die Hubkappe 31 im Wesentlichen hohlzylindrisch ausgestaltet ist und nach unten hin mit einer einen zylindrischen Innenraum bildenden Ausgleichshülse 32 verbunden ist, in deren Innenraum ein Ausgleichsstift 33 als Ausgleichsteil angeordnet ist. Weiter umfasst die Hubkappe 31 einen Vorsprung 311 der an einer Fläche der Kulisse 2 anliegt. Die Ausgleichshülse 32 weist auf der rechten Seite sich in den Innenraum der Ausgleichshülse 32 erstreckende Innenzähne 321 auf und der Ausgleichsstift 33 auf der linken Seite sich nach aussen erstreckende Aussenzähne 331.

Die Antriebsaufnahme 12 des Gehäuses 1 erstreckt sich in den Innenraum der Hubkappe 31 hinein, wobei sie darin einen nach oben geöffneten Behälter 121 bildet, in dem ein thermischer Antrieb 6 als Aktor angeordnet ist. Der thermischer Antrieb 6 weist ein ein Dehnelement umschliessendes Gehäuse 61 auf, das auf seiner unteren Seite mit einer Widerstandsheizung 63 verbunden ist und an dessen oberen Seite ein Kolben 62 herausragt. Das äussere obere Längsende des Kolbens 62 liegt an der Hubkappe 31 an. Zwischen der Antriebsaufnahme 12 und der Ausgleichshülse 32 ist eine Betätigungsfeder 7 als Druckelement eingespannt, die die Ausgleichshülse 32 vom thermischen Antrieb 6 wegbewegt. Zwischen der Antriebsaufnahme 12 und dem Ausgleichsstift 33 ist eine Ausgleichsfeder 8 als weiteres Druckelement eingespannt, die den Ausgleichsstift 33 ebenfalls vom thermischen Antrieb 6 wegbewegt. Der Bajonettring 4 weist an seiner Innenseite korrespondierend zu den L-Vorsprüngen 52 (in Fig. 2 nicht ersichtlich) des Adapters 5 ausgestaltete L-Aufnahmen 42 auf.

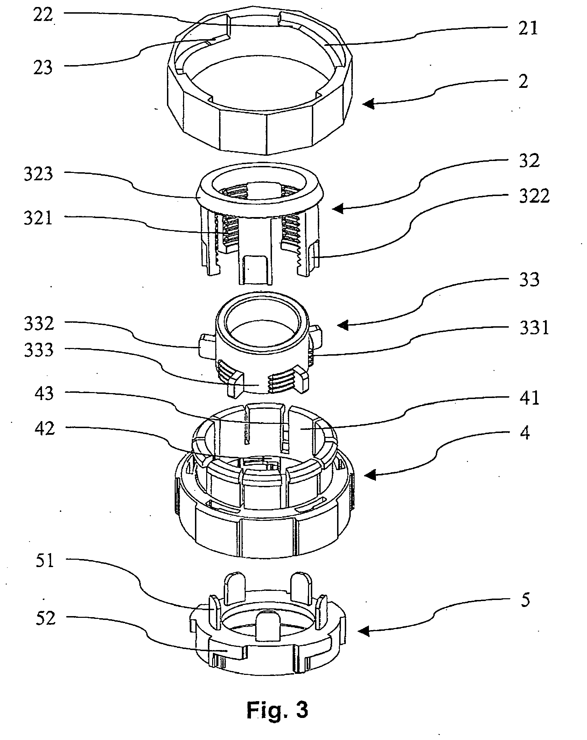

**Fig. 3** zeigt einige Teile des Ventilantriebs von Fig. 1 in einer detaillierten perspektivischen Explosionsansicht, wobei die Perspektive bei jedem der Teile so angepasst ist, dass die wesentlichen Elemente des jeweiligen Teils ersichtlich sind. Die Kulisse 2 weist drei an ihrer Innenseite ausgestaltete Schrägflächen 21 auf, die jeweils an ihren oberen Enden in eine horizontale Fixierfläche 22 und jeweils an ihren unteren Enden in eine horizontale Ausgangsfläche 23 übergehen. In der in Fig. 1 und in Fig. 2 gezeigten Ausgangsposition des Ventilantriebs liegen die drei Vorsprünge 311 der Hubkappe 31 (in Fig. 3 nicht ersichtlich) jeweils auf der Ausgangsfläche 23 der Kulisse 2 auf.

Die Ausgleichshülse 32 bildet mittels fünf vertikaler voneinander beabstandeter Zylindersegmente, die über einen einen Vorsprung 323 aufweisenden Ring miteinander verbunden sind, einen zylinderförmigen Innenraum. Wie in Fig. 2 ersichtlich, greift der Vorsprung 323 in zusammengebautem Ausgangszustand des Ventilantriebs hinter einen entsprechenden Vorsprung der Hubkappe 31, so dass die Ausgleichshülse 32 und die Hubkappe 31 als Hubteil miteinander verbunden sind. Die Zylindersegmente weisen an ihren Innenseiten die Innenzähne 321 auf und im unteren Bereich ihrer Aussenseiten nach unten geöffnete Schwertaufnahmen 322. Die Schwertaufnahme 322 sind entsprechend den Schwertern 51 des Adapters 5 ausgestaltet.

Der im Wesentlichen hohlzylindrische Ausgleichsstift 33 weist im unteren Bereich seines Umfangs die alternierend mit Bereichen ohne Zähne 333 in fünf Gruppen angeordneten Aussenzähne 331 auf. Jeweils rechts an die Aussenzähne 331 angrenzend sind vertikale radial nach aussen abstehende Schwerter 332 am Umfang angeordnet. Im in Fig. 2 gezeigten zusammengebauten Ausgangszustand des Ventilantriebs ist der Ausgleichsstift 33 so im Innenraum der Ausgleichshülse 32 angeordnet, dass die Zylindersegmente der Ausgleichshülse 32 jeweils angrenzend an einem Bereich ohne Zähne 333 des Ausgleichsstifts 33 liegen, so dass der Ausgleichsstift 33 in Längsrichtung der Ausgleichshülse 32 bewegbar ist.

Am oberen Rand des Bajonettrings 4 sind die zehn Schnappelemente 41 angeordnet, wobei jeder zweite Zwischenspalt zwischen den Schnappelementen 41 als Scharte 43 ausgestaltet ist. Im zusammengebauten Zustand des Ventilantriebs ist jeweils ein Schwert 332 des Ausgleichsstifts 33 in einer der Scharten 43 angeordnet, so dass einerseits bei einer Drehung des Bajonettrings 4 der Ausgleichsstift 33 mitdreht und dass andererseits die Bewegung des Ausgleichsstifts 33 in Längsrichtung der Ausgleichshülse 32 nach unten durch das Ende der Scharten 43 begrenzt ist.

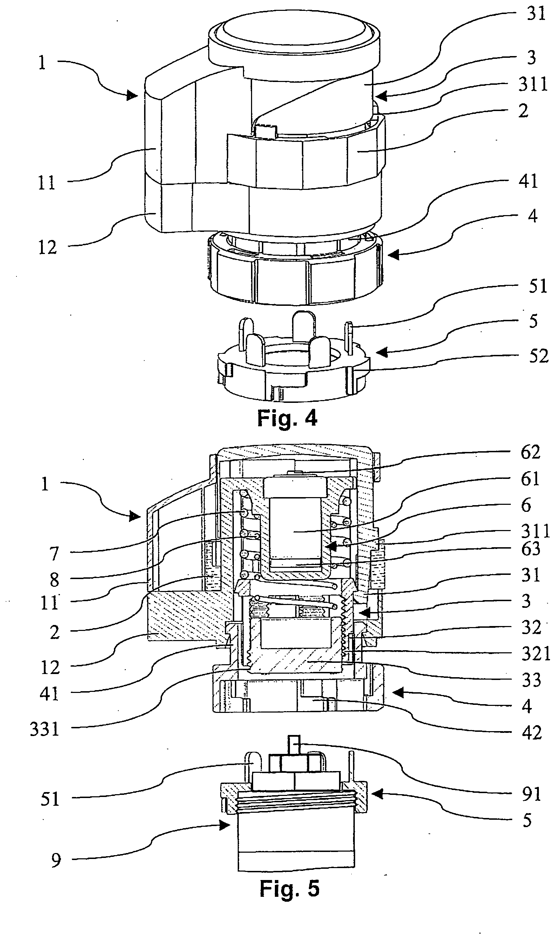

In Fig. 4 und in Fig. 5 ist der Ventilantrieb in einer vorgespannten Stellung gezeigt, wobei die Kulisse 2 typischerweise manuell im Uhrzeigersinn soweit gedreht ist, dass die Vorsprünge 311 der Hubkappe 31 entlang der Schrägflächen 21 der Kulisse 2 bis auf deren Fixierfläche 22 bewegt sind. Die Hubkappe 31 ist damit zusammen mit der Ausgleichshülse 32 entgegen der Federkraft der Betätigungsfeder 7 nach oben gehoben und die Betätigungsfeder 7 ist vorgespannt. Dabei ist die Hubkappe 31 auch vom Kolben 62 des thermischen Antriebs 6 abgehoben. Der Ausgleichsstift 33, der in dieser vorgespannten Stellung wie auch in der Ausgangsstellung nicht mit der Ausgleichshülse 32 verriegelt ist, ist durch die Ausgleichsfeder 8 bis an das Ende der Scharten 43 des Bajonettrings 4 nach unten gedrückt, so dass er in maximal möglicher Entfernung zum thermischen Antrieb 6 angeordnet ist. Der Adapter 5 ist mittels eines Gewindes an einem Ventil 9 befestigt, so dass sich eine Betätigungsspindel 91 des Ventils 9 zentral im Adapter 5 parallel zu den Schwertern 51 nach oben erstreckt.

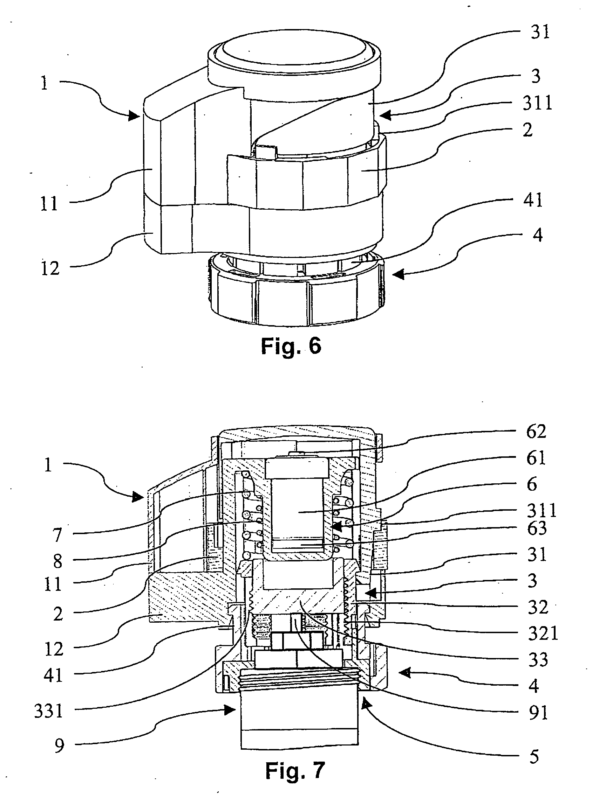

Fig. 6 und Fig. 7 zeigen den Ventilantrieb in einem auf das Ventil 9 aufgesetzten unverriegelten und vorgespannten Zustand. Beim Aufsetzen des Ventilantriebs auf das Ventil 9 liegt die Betätigungsspindel 91 an den Ausgleichsstift 33 an und drückt diesen entgegen der Federkraft der Ausgleichsfeder 8 nach oben. Da gleichzeitig die Ausgleichshülse 32 durch die Betätigungsfeder 7 nach unten gedrückt ist, ist der Ausgleichsstift 33 dabei in der Ausgleichshülse 32 in Hubrichtung so weit nach oben bewegt, wie es erforderlich ist, um das Schliessmass des Ventils 9 aufzunehmen. Ebenfalls werden beim Aufsetzen die Schwerter 51 des Adapters 5 in die Schwertaufnahmen 322 der Ausgleichshülse 32 eingeführt und somit das Ventil 9. und die Ausgleichshülse 32 miteinander drehfest verbunden. Damit ein Hochdrücken des Ausgleichsstifts 33 durch die Betätigungsspindel 91 möglich ist, ist die Federkraft der Ausgleichsfeder 8 kleiner ausgelegt als die Federkraft einer Rückstellfeder des Ventils 9, mit der die Betätigungsspindel 91 aus dem Ventil 9 gedrückt wird.

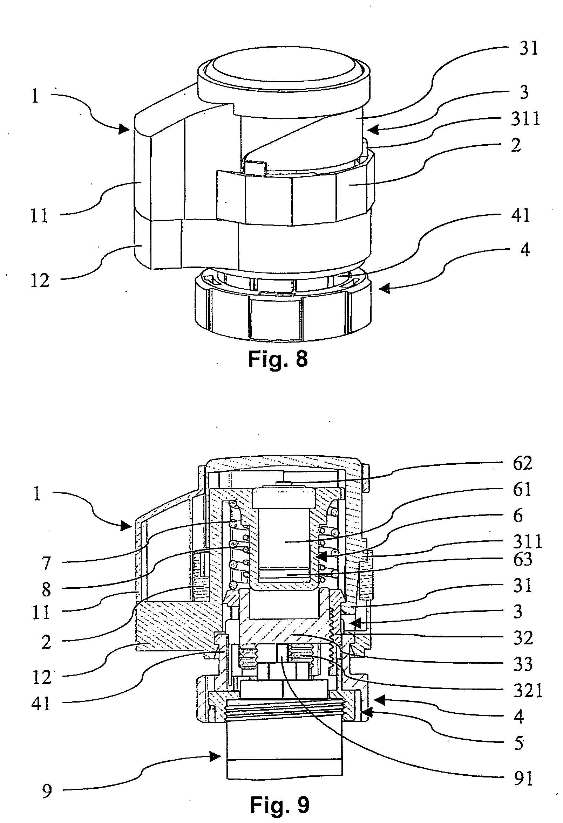

Wie in Fig. 8 und in Fig. 9 gezeigt wird der Ventilantrieb nach dem oben beschriebenen Aufsetzen auf dem Ventil 9 verriegelt. Dazu ist der Bajonettring 4 im Gegenuhrzeigersinn verdreht, so dass die L-Vorsprünge 52 des Adapters 5 in die L-Aufnahmen 42 des Bajonettrings 4 greifen. Mit dem Verdrehen des Bajonettrings 4 ist mittels der in den Scharten 43 des Bajonettrings 4 angeordneten Schwerter 332 des Ausgleichsstifts 33 auch der Ausgleichsstift 33 verdreht. Da die Ausgleichshülse 32 mittels der Schwerter 51 des Adapters 5 drehfest gehalten ist, ist der Ausgleichsstift 33 in der Ausgleichshülse 32 so gedreht, dass die Innenzähne 321 der Ausgleichshülse 32 in die Aussenzähne 331 des Ausgleichsstifts 33 greifen. Damit ist der Ausgleichsstift 33 in Hubrichtung mit der Ausgleichshülse 32 verriegelt und das Hubelement 3 als Ganzes bewegbar.

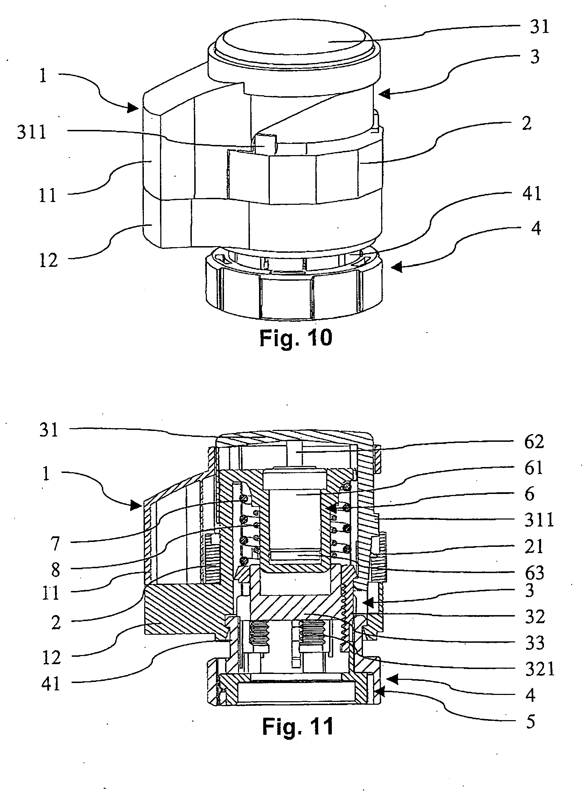

Fig. 10 und Fig. 11 zeigen den Ventilantrieb in Betriebszustand, in dem die Kulisse 2 wieder im Gegenuhrzeigersinn in seine Ausgangsstellung gedreht ist. Der thermischer Antrieb 6 ist aktiviert, indem die Widerstandsheizung 63 mit Strom beaufschlagt ist, wodurch das im Gehäuse 1 angeordnete Dehnelement erwärmt wird. Dadurch dehnt sich das Dehnelement aus und schiebt den Kolben 62 aus dem Gehäuse 61. Die Hubkappe 31 und mit ihr das ganze Hubelement 3 ist dadurch in Hubrichtung angehoben und die Betätigungsfeder 7 ist gespannt. Die Rückstellfeder des Ventils 9 drückt die Betätigungsspindel 91 entsprechend der Hubbewegung des Hubelements 3 aus dem Ventil 9 und stellt ein Stellelement des Ventils 9 zurück. Durch die Öffnung des Gehäuses 1 ist in diesem Zustand von ausserhalb des Ventilantriebs ersichtlich, dass das Hubelement 3 angehoben ist und der thermische Antrieb 6 aktiviert.

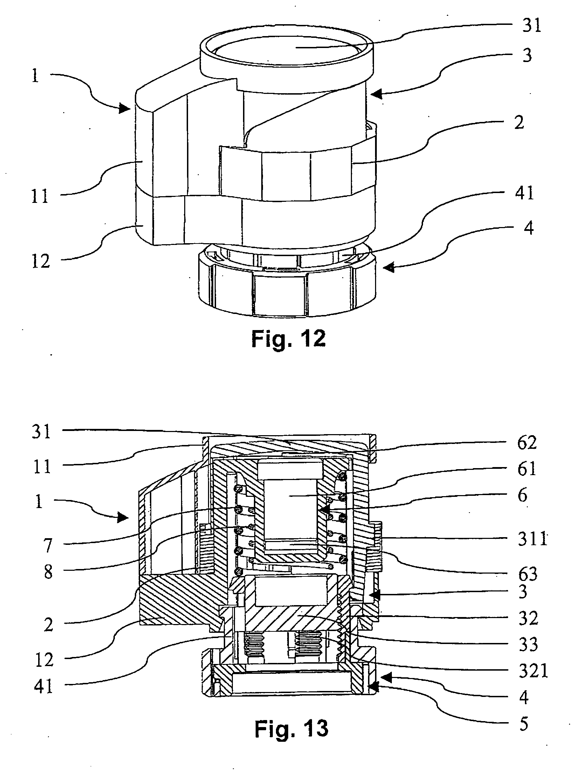

In der Fig. 12 und der Fig. 13 ist der Ventilantrieb im Betriebszustand gezeigt, wobei der thermische Antrieb 6 nicht aktiviert ist. Der Kolben 62 des thermischen Antriebs 6 ist dabei in das Gehäuse 61 eingefahren. Das Hubelement 3 ist durch die Betätigungsfeder 7 so abgesenkt, dass die Betätigungsspindel 91 des Ventils 9 in das Ventil 9 gedrückt ist. Wiederum ist durch die Öffnung des Gehäuses 1 von ausserhalb des Ventilantriebs ersichtlich, dass das Hubelement 3 abgesenkt ist und der thermische Antrieb 6 nicht aktiviert.

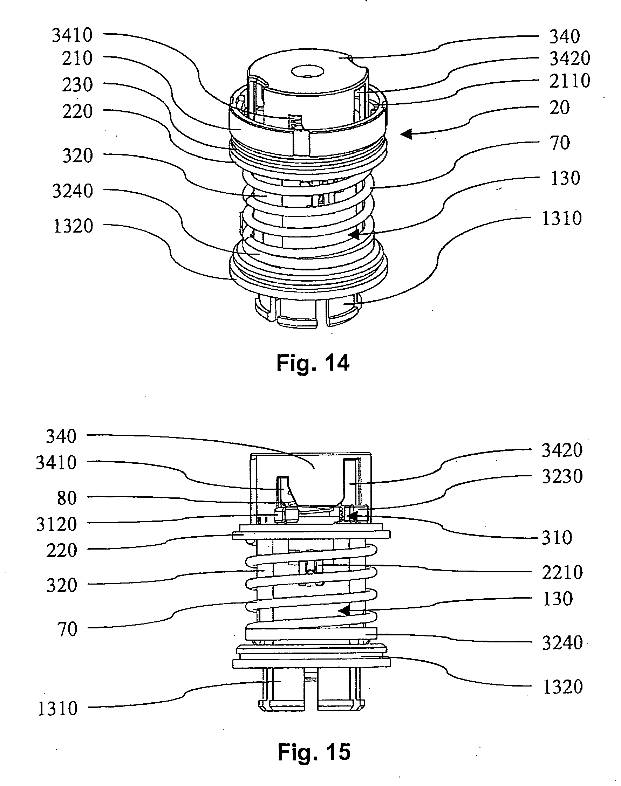

Fig. 14 zeigt eine perspektivische Ansicht eines zweiten Ausführungsbeispiels des erfindungsgemässen Ventilantriebs, wobei für eine bessere Übersichtlichkeit der Ventilantrieb ohne äusseres Gehäuse dargestellt ist. Der Ventilantrieb umfasst ein zwei Hohlzylindersegmente aufweisendes Grundelement 130, wobei die Hohlzylindersegmente nach unten hin in sechs Schnappelemente 1310 übergehen. Die Hohlzylindersegmente sind in ihrem unteren Bereich fest mit einem ringförmigen Sockel 1320 verbunden, an dem das äussere Gehäuse (in Fig. 14 nicht gezeigt) befestigbar ist. Auch umfasst der Ventilantrieb einen nach unten hin offenen im Wesentlichen hohlzylindrischen Deckel 340 mit zwei vertikal ausgestalteten Betriebsscharten 3410, zwei vertikal ausgestalteten Ausgleichsscharten 3420 und einer Öffnung auf seiner Oberseite. Um den untersten Bereich des Deckels 340 herum ist eine drehbare Kulisse 210 einer Betätigung 20 angeordnet. Die Betätigung 20 umfasst weiter einen Kulissensockel 220, der mit dem Deckel 340 drehfest verbunden ist, und eine zwischen der Kulisse 210 und dem Kulissensockel 220 angeordnete und entgegen dem Uhrzeigersinn spannbare Drehfeder 230. Die Kulisse 210 weist zwei an seinem Innenrand ausgestaltete äussere Schrägflächen 2110 auf.

Der Ventilantrieb umfasst weiter eine Ausgleichshülse 320, die durch den Kulissensockel 220 hindurch angeordnet ist und an ihrem unteren Ende einen Federrand 3240 aufweist. Zwischen dem Kulissensockel 220 und dem Federrand 3240 ist eine Betätigungsfeder 70 als Druckelement angeordnet. Am unteren Ende des Ventilantriebs ist ein Bajonettring (in Fig. 14 nicht gezeigt) auf die Schnappelemente 1310 des Grundelements 130 drehbar aufgeschnappt, mittels welchem der Ventilantrieb mit einem Adapter (in Fig. 14 nicht gezeigt) verbindbar ist.

In Fig. 15 ist der Ventilantrieb von Fig. 14 gezeigt, wobei zur besseren Übersichtlichkeit die Kulisse 210 und die Drehfeder 230 der Betätigung 20 nicht dargestellt sind. Im Innern des Deckels 340 ist eine Hubkappe 310 mit einem radial aus dem Deckel 340 ragenden Drehglied 3120 als Hubteil und eine Ausgleichsfeder 80 als weiteres Druckelement angeordnet. Die Ausgleichshülse 320 umfasst einen radial aus dem Deckel 340 ragenden Vorsprung 3230. In der in den Fig. 14 und Fig. 15 gezeigten Ausgangsstellung ist das Drehglied 3120 am unteren Ende der Betriebsscharte 3410 angeordnet und der Vorsprung 3230 am unteren Ende der Ausgleichsscharte 3420. Der Kulissensockel 220 weist zwei nach unten ragende Klemmen 2210 auf, über die er auf dem Grundelement 130 aufgeklemmt ist.

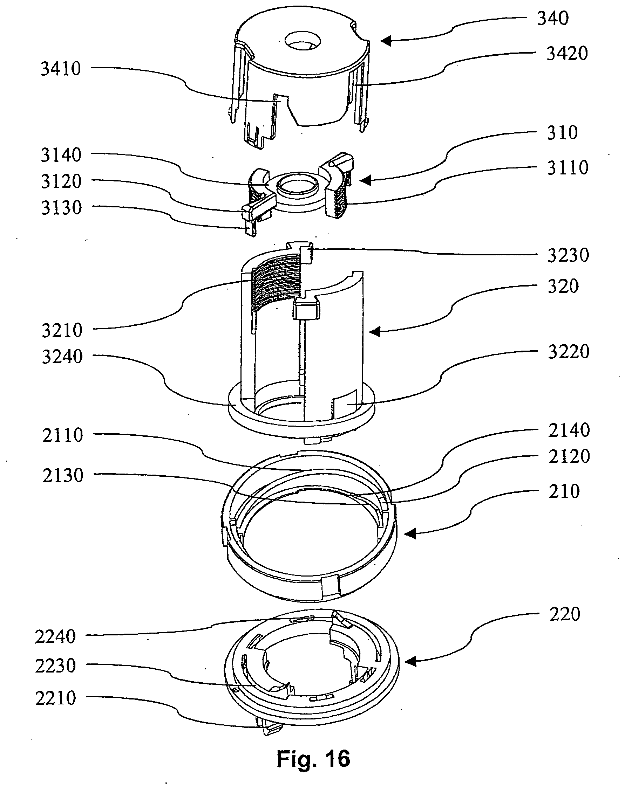

Fig. 16 zeigt einige Teile des Ventilantriebs von Fig. 14 in einer perspektivischen Explosionsansicht, wobei die Perspektive bei jedem der Teile so angepasst ist, dass die wesentlichen Elemente des jeweiligen Teils ersichtlich sind. Die Betriebsscharten 3410 und die Ausgleichsscharten 3420 des Deckels 340 sind jeweils nach unten hin in eine Richtung aufgeweitet ausgestaltet, wobei ihre Seitenwände in diese Richtungen jeweils weniger lang sind als in eine entgegengesetzte Richtung. Die Hubkappe 310 weist einen Ringteil 3140 auf um den herum zwei entgegengesetzt angeordnete, im Wesentlichen zylindersegmentförmige Seitenwände angeordnet sind. Die Seitenwände weisen an ihren Aussenseiten Aussenzähne 3110 auf. An einem Ende im Gegenuhrzeigersinn der Seitenwände ist in deren oberen Bereichen jeweils das radial nach aussen abstehende Drehglied 3120 angeordnet, das in ein vertikal nach unten ragendes Schwert 3130 mündet. In der in Fig. 14 und in Fig. 15 gezeigten Ausgangsstellung ist die Hubkappe 310 im Innern des Deckels 340 angeordnet, so dass die Drehglieder 3120 jeweils an der im Uhrzeigersinn die Betriebsscharte 3410 begrenzenden Seitenwand einer der beiden Betriebsscharten 3410 anliegen.

Die Ausgleichshülse 320 weist zwei einander gegenüber angeordnete, zylinderförmigsegmentförmige Seitenwände auf, die an ihrem unteren Ende über den ringförmigen Federrand 3240 mittels zweier Schnappelemente 3220 fest miteinander verbunden sind. Gegen ihr oberes Ende zu weisen die Seitenwände an ihren Innenseiten Innenzähne 3210 auf und an ihrem unteren Ende an den Aussenseiten jeweils eines der zwei Schnappelemente 3220. Die beiden Vorsprünge 3230 sind jeweils an einem Ende im Uhrzeigersinn der zugehörigen Seitenwand oben an diesen radial nach aussen abstehend ausgestaltet. In der in Fig. 14 und in Fig. 15 gezeigten Ausgangsstellung ist die Ausgleichshülse 320 so angeordnet, dass die Vorsprünge 3230 jeweils an der im Gegenuhrzeigersinn die Ausgleichsscharte 3420 begrenzenden Seitenwand einer der beiden Ausgleichsscharten 3420 anliegen. Weiter ist in der Ausgangsstellung die Hubkappe 310 am oberen Ende im Innern der Ausgleichshülse 320 angeordnet, wobei die Aussenzähne 3110 der Hubkappe 310 mit den Innenzähnen 3210 der Ausgleichshülse 320 in Eingriff sind. Die Hubkappe 310 und die Ausgleichshülse 320 sind somit miteinander verriegelt, so dass sie nicht in Hubrichtung zueinander bewegbar sind.

Die beiden äusseren Schrägflächen 2110 der Kulisse 210 münden nach oben hin jeweils in eine Fixierfläche 2120 als Fixierelement. Zusätzlich weist die Kulisse zwei innere Schrägflächen 2130 auf, die kürzer ausgestaltet sind als die äusseren Schrägflächen 2110 und die an ihrem unteren Ende jeweils in einen Absatz 2140 münden. In der in Fig. 14 und in Fig. 15 gezeigten Ausgangsstellung ist die Kulisse 210 so um den Deckel 340, die Hubkappe 310 und die Ausgleichshülse 320 herum angeordnet, dass die beiden Vorsprünge 3230 der Ausgleichshülse 320 unterhalb jeweils einer äusseren Schrägfläche 2110 liegen. Weiter überragen die Vorsprünge 3230 die Drehglieder 3120 in radialer Richtung, so dass sich die Drehglied 3120 nicht bis zu den äusseren Schrägflächen 2110 erstrecken.

Der Kulissensockel 220 weist zwei jeweils einander gegenüberliegende vertikale Paare von Deckelaufnahmen 2220 und zwei einander gegenüberliegende vertikale Schwertschlitze 2230 auf. Die Schwertschlitze 2230 sind über einen bestimmten Bereich in Umfangrichtung ausgestaltet, wobei innen an den Schwertschlitzen 2230 gegen deren Ende im Gegenuhrzeigersinn zu jeweils eine Rampe 2240 angeordnet ist. In der in Fig. 14 und in Fig. 15 gezeigten Ausgangsstellung ist der Kulissensockel 220 mittels der Deckelaufnahmen 2220 fest mit dem Deckel 340 verbunden. Die beiden Schwerter 3130 der Hubkappe 310 sind jeweils durch eine der Schwertschlitze 2230 hindurch angeordnet, wobei sie sich in einem der Rampe 2240 abgewandten Endbereich der Schwertschlitze 2230 befinden.

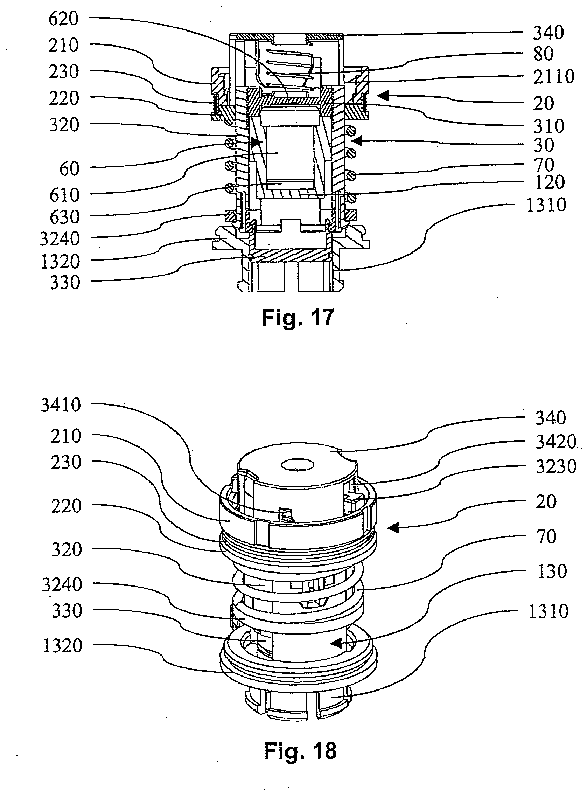

In Fig. 17 ist ein Querschnitt des Ventilantriebs von Fig. 14 gezeigt, wobei eine Antriebsaufnahme 120 ersichtlich ist. Die Antriebsaufnahme 120 weist einen Behälter auf, in dem ein thermischer Antrieb 60 als Aktor mit einem ein Dehnelement einschliessenden Gehäuse 610, einem nach oben aus dem Gehäuse 610 ragenden Kolben 620 und einer unterhalb des Gehäuses 610 liegenden Widerstandsheizung 630 angeordnet ist. Die Hubkappe 310 liegt mit seiner Unterseite an einer Oberseite des Kolbens 620 an. Zwischen der Oberseite des Deckels 340 und der Oberseite der Hubkappe 310 ist die Ausgleichsfeder 80 angeordnet. Mit der Ausgleichshülse 320 ist nach unten hin ein Ausgleichsstift 330 als Ausgleichsteil fest verbunden.

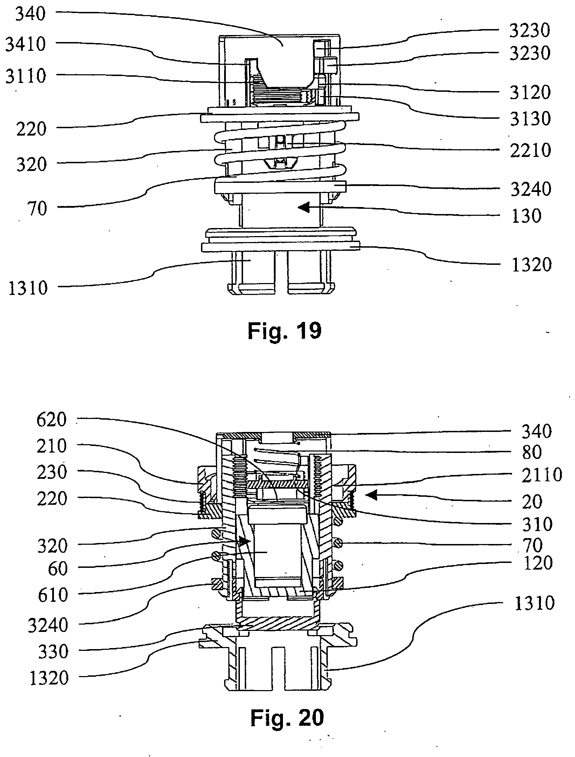

In der in Fig. 18, in Fig. 19 und in Fig. 20 gezeigten vorgespannten Stellung des Ventilantriebs von Fig. 14 ist die Kulisse 210 typischerweise manuell im Gegenuhrzeigersinn gedreht. Dabei ist die Hubkappe 310 im Verhältnis zur Ausgleichshülse 320 verdreht, so dass die Aussenzähne 3110 in den Bereichen der Ausgleichshülse 320 angeordnet sind, die keine Innenzähne 3210 aufweisen. Somit sind in dieser Stellung Hubkappe 310 und Ausgleichshülse 320 voneinander entriegelt. Während der erwähnten Drehung der Kulisse 210 wird die Drehfeder 230 gespannt und mittels des am Absatz 2140 der Kulisse 210 anliegenden Drehglieds 3120 die Hubkappe 310 gedreht. Ist das Drehglied 3120 während dieser Drehung der Kulisse 210 bei der Rampe 2240 des Kulissensockels 220 angelangt, wird es durch dieses über den Absatz 2140 ausgehoben und durch die innere Schrägfläche 2130 angehoben. Gleichzeitig wird während dieser Drehung die Ausgleichshülse 320 durch die an den äusseren Schrägflächen 2110 anliegenden Vorsprüngen 3230 bis auf die Fixierflächen 2120 angehoben, so dass in der vorgespannten Stellung sowohl die Hubkappe 310 als auch die Ausgleichshülse 320 angehoben sind und sowohl die Drehglieder 3120 als auch die Vorsprünge 3230 in den Ausgleichsscharten 3420 angeordnet sind.

Die Betätigungsfeder 70 ist in einer gespannten Position, wobei sie die Ausgleichshülse 320 entgegen der Hubrichtung und den Ausgleichsstift 330 weg vom thermischen Antrieb 60 drückt. Damit sind auch die Vorsprünge 3230 der Ausgleichshülse 320 auf die Fixierflächen 2120 der Kulisse 210 gedrückt, so dass die Kulisse 210 trotz der gespannten Drehfeder 230 in einer stabilen Position gehalten ist. Die Ausgleichsfeder 80 drückt die Hubkappe 310 in Richtung des thermischen Antriebs 60, so dass sie entgegen der Hubrichtung in der Ausgleichshülse 320 bewegt ist. In der vorgespannten Stellung wird der Ventilantrieb mittels einem Adapter auf einem Ventil montiert, so dass ein oberes Ende der Betätigungsspindel des Ventils unterhalb des Ausgleichsstifts 330 angeordnet ist.

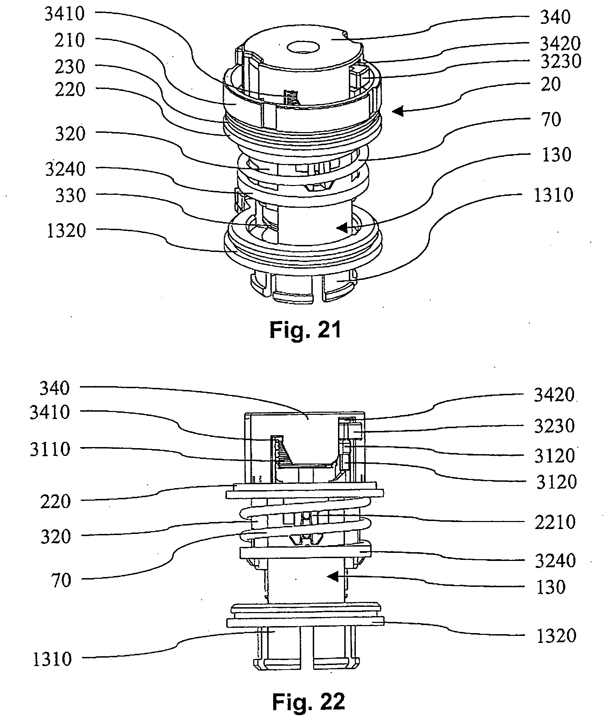

Fig. 21, Fig. 22 und Fig. 23 zeigen den Ventilantrieb von Fig. 14 in einer Auslösstellung, wobei der thermischer Antrieb 60 aktiviert ist. Im Betrieb ist der Ventilantrieb dabei auf einem Ventil montiert. Dazu ist die Widerstandsheizung 630 mit Strom beaufschlagt und der Kolben 620 aus dem Gehäuse 610 ausgefahren. Die Hubkappe 310 ist durch den Kolben 620 in Hubrichtung entgegen der Federkraft der Ausgleichsfeder 80 angehoben. Während dieses Anhebens liegen die Drehglieder 3120 der Hubkappe 310 an den Vorsprüngen 3230 der Ausgleichshülse 320 an, so dass in der Auslösstellung die Ausgleichshülse 320 und der Ausgleichsstift 330 zusammen mit der Hubkappe 310 angehoben sind.

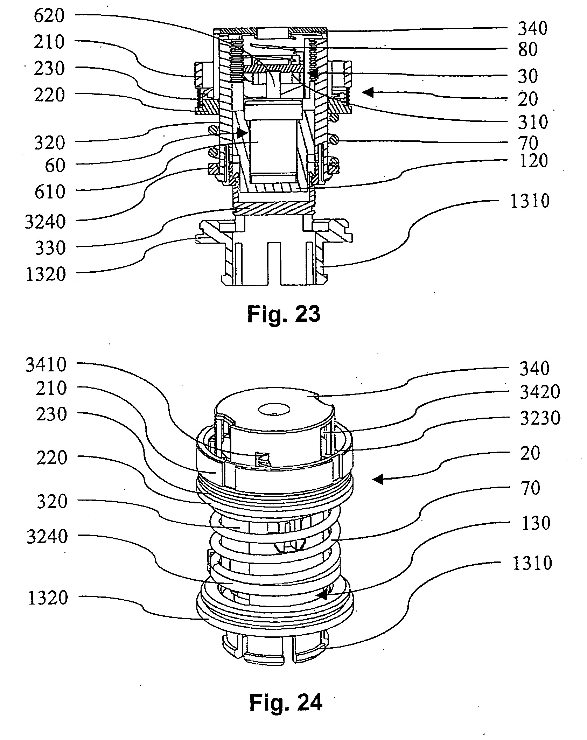

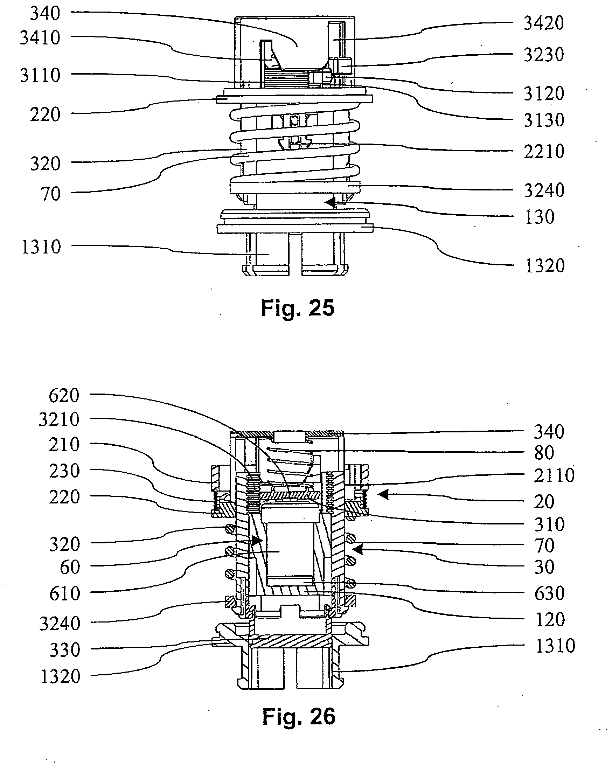

In Fig. 24, in Fig. 25 und in Fig. 26 ist der Ventilantrieb von Fig. 14 in einer Kompensationsstellung gezeigt, wobei er dabei im Betrieb auf dem Ventil montiert ist. Da die Betätigungsfeder 70 die Vorsprünge 3230 der Ausgleichshülse 320 nicht mehr an die Fixierfläche 2120 der Kulisse 210 drückt, ist die Kulisse 210 durch die Federkraft der Drehfeder 230 im Uhrzeigersinn zurückgedreht. Dabei ist die Hubkappe 310 ebenfalls zusammen mit der Kulisse 210 zurückgedreht. Die Ausgleichshülse 320 und der Ausgleichsstift 330 sind soweit nach unten bewegt, bis sie auf der Betätigungsspindel des Ventils aufliegen. Somit ist die Hubkappe 310 an einer beliebigen auf das Schliessmass des Ventils angepassten Lage mit der Ausgleichshülse 320 verriegelt.

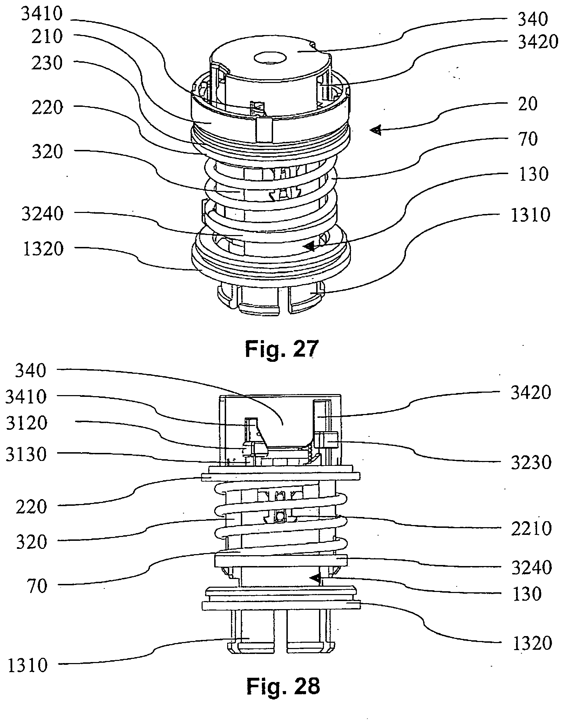

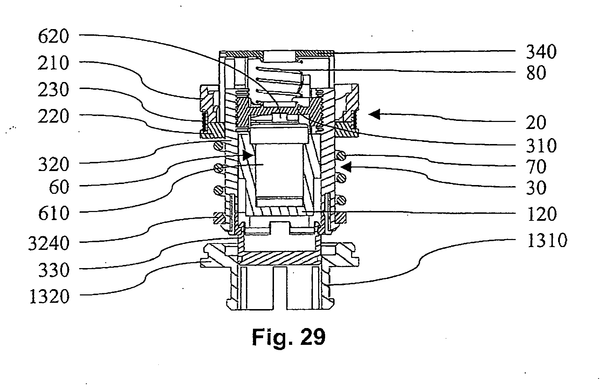

Fig. 27, Fig. 28 und Fig. 29 zeigen den Ventilantrieb von Fig. 14 im Betriebszustand. Die Hubkappe 310, die Ausgleichshülse 320 und die Ausgleichsstifte 330 bilden dabei ein auf die Betätigungsspindel wirkendes Hubelement, welches entsprechend der oben beim ersten Ausführungsbeispiel dargelegten Weise mittels des thermischen Antriebs 60 und der Betätigungsfeder 70 das Ventil betätigen.

Zu den vorbeschriebenen erfindungsgemässen Vorrichtungen sind weitere konstruktive Variationen realisierbar. Hier ausdrücklich erwähnt seien noch:
- Im Ventilantrieb können verschiedene andere Aktoren als der thermische Antrieb eingesetzt werden. Beispielsweise ist die Verwendung eines mechanischen Antriebs, eines chemischen Aktors oder einer Gedächtnislegierung möglich.
- Der Ventilantrieb kann so ausgelegt sein, dass er ein Ventil in unaktiviertem Zustand entweder schliesst oder öffnet. Auch kann er Mittel zur Umkehr dessen in unaktiviertem Zustand aufweisen.
- Das Hubelement kann durch reine Auflage oder durch Formschluss in Verbindung mit dem Kolben des thermischen Antriebs stehen. Das gleiche gilt für die Verbindung der Betätigungsspindel mit dem Hubelement.
- Das Gehäuse des Ventilantriebs kann alternativ zur Öffnung oder auch zusätzlich zur Öffnung ein Fenster aufweisen, durch welches die Stellung des Hubelements von ausserhalb des Gehäuses sichtbar ist. Ein solches Gehäuse mit einem Fenster kann beispielsweise mittels Zweikomponentenspritzverfahren aus zwei unterschiedlichen Kunststoffen gespritzt sein, wobei insbesondere einer der beiden Kunststoffe transparent sein kann und der andere der beiden Kunststoffe untransparent.

## Patentansprüche

1. Ventilantrieb zum Betätigen eines Ventils (9) mit einer entlang seiner Längsachse bewegbaren Betätigungsspindel (91), der ein mit der Betätigungsspindel (91) wirkungsmässig verbindbares Hubelement (3; 30), ein auf das Hubelement (3; 30) wirkendes Druckelement (7; 70) und einen Aktor (6; 60) umfasst, wobei das Hubelement (3; 30) mittels des Aktors (6; 60) in eine Hubrichtung bewegbar ist und wobei das Druckelement (7; 70) so angeordnet ist, dass eine Kraft entgegen der Hubrichtung auf das Hubelement (3; 30) wirkt, **dadurch gekennzeichnet, dass** das Hubelement (3; 30) ein mit der Betätigungsspindel (91) wirkungsmässig verbindbares Ausgleichsteil (33; 330, 320) und ein mit dem Aktor (6; 60) wirkungsmässig verbindbares Hubteil (31, 32; 310) umfasst, wobei das Ausgleichsteil (33; 330, 320) und das Hubteil (31, 32; 310) über Verriegelungsmittel (321, 331, 4; 3110, 3210, 210) an in Hubrichtung verschiedenen Positionen zueinander miteinander verriegelbar und voneinander entriegelbar sind.

2. Ventilantrieb nach Anspruch 1, bei dem das Hubteil (31, 32; 310) das Ausgleichsteil (33; 330, 320) mindestens teilweise umschliesst, so dass das Ausgleichsteil (33; 330, 320) im Hubteil (31, 32; 310) bewegbar ist, wenn das Ausgleichsteil (33; 330, 320) und das Hubteil (31, 32; 310) voneinander entriegelt sind.

3. Ventilantrieb nach Anspruch 2, bei dem die Verriegelungsmittel (321, 331, 4; 3110, 3210, 210) an einer Aussenseite des Ausgleichsteils (33; 330, 320) angeordnete Aussenzähne (331; 3110) und an einer Innenseite des Hubteils (31, 32; 310) angeordnete Innenzähne (321; 3210) umfassen, wobei die Aussenzähne (331; 3110) und die innenzähne (321; 3210) ineinander greifen, wenn das Ausgleichsteil (33; 330, 320) und das Hubteil (31, 32; 310) miteinander verriegelt sind.

4. Ventilantrieb nach einem der vorangehenden Ansprüche, bei der die Verriegelungsmittel (321, 331, 4; 3110, 3210, 210) eine Betätigungseinheit (4; 210) zum Betätigen der Verriegelung umfassen.

5. Ventilantrieb nach Anspruch 3 und 4, bei dem die Aussenseite des Ausgleichsteils (33; 330, 320) in Umfangrichtung alternierend zueinander angeordnete Bereiche mit den Aussenzähnen (331; 3110) und Bereiche ohne die Aussenzähne (333) aufweist und bei dem die Innenseite des Hubteils (31, 32; 310) in Umfangrichtung alternierend zueinander angeordnete Bereiche mit den Innenzähnen (321; 3210) und Bereiche ohne die Innenzähne (321; 3210) aufweist, wobei das Hubteil (31, 32; 310) und das Ausgleichsteil (33; 330, 320) über die Betätigungseinheit (4; 210) von einer entriegelten Stellung, in der die Aussenzähne (331; 3110) benachbart zu den Breichen ohne die Innenzähne und die Innenzähne (321; 3210) benachbart zu den Bereichen ohne die Aussenzähne (333) liegen, zu einer verriegelten Stellung, in der die Aussenzähne (331; 3110) und die Innenzähne (321; 3210) ineinander greifen, zueinander bewegbar sind.

6. Ventilantrieb nach einem der vorangehenden Ansprüche, der eine Vorspanneinrichtung (2; 20) umfasst, mit der das Hubelement (3; 30) in Hubrichtung entgegen der Kraft des Druckelements (7; 70) bewegbar ist, wobei die Vorspanneinrichtung (2; 20) ein Fixierelement (22; 2120) aufweist, mittels dem das Hubelement (3; 30) in einer Stellung fixierbar ist, in der das Druckelement (7; 70) vorgespannt ist.

7. Ventilantrieb nach einem der vorangehenden Ansprüche, bei dem das Druckelement (7) wirkungsmässig mit dem Hubteil (31, 32) verbunden ist und der ein weiteres Druckelement (8) aufweist, das wirkungsmässig mit dem Ausgleichsteil (33) verbunden ist, wobei das weitere Druckelement (8) so angeordnet ist, dass eine Kraft entgegen der Hubrichtung auf das Ausgleichsteil (33) wirkt.

8. Ventilantrieb nach einem der Ansprüche 1 bis 6, bei dem das Druckelement (70) wirkungsmässig mit dem Ausgleichsteil (330, 320) verbunden ist und der ein weiteres Druckelement (70) aufweist, das wirkungsmässig mit dem Hubteil (310) verbunden ist, wobei das weitere Druckelement (70) so angeordnet ist, dass eine Kraft entgegen der Hubrichtung auf das Hubteil (310) wirkt.

9. Ventilantrieb nach einem der vorangehenden Ansprüche, der ein Gehäuse (1) mit einer Öffnung oder einem Fenster aufweist, mittels derer bzw. mittels dessen die Stellung des Hubelements (3; 30) von ausserhalb des Gehäuses (1) sichtbar ist.

10. Ventilantrieb nach Anspruch 9, dessen Gehäuse (1) mittels Zweikomponentenspritzverfahren aus einem transparenten Kunststoff und einem untransparenten Kunststoff hergestellt ist, wobei das Fenster durch den transparenten Kunststoff gebildet ist.

## Claims

1. Valve actuator for activating a valve (9) with an activating spindle (91) which can be moved along its longitudinal axis, which comprises a lifting element (3; 30) functionally connectable to the activating spindle (91), a pressure element (7; 70) acting on the lifting element (3; 30) and an actuator (6; 60), wherein the lifting element (3; 30) can be moved by means of the actuator (6; 60) in a lifting direction and wherein the pressure element (7; 70) is arranged so that a force acts against the lifting direction on the lifting element (3; 30), **characterised in that** the lifting element (3; 30) comprises a balancing part (33; 330, 320) which is functionally connectable to the activating spindle (91) and a lifting part (31, 32; 310) which is functionally connectable to the actuator (6; 60), wherein the balancing part (33; 330, 320) and the lifting part (31, 32; 310) can be locked together by locking means (321, 331, 4; 3110, 3210, 210) and unlocked from one another, in different positions in the lifting direction.

2. Valve actuator according to claim 1, wherein the lifting part (31, 32; 310) at least partly encloses the balancing part (33; 330, 320) so that the balancing part (33; 330, 320) can be moved in the lifting part (31, 32; 310) when the balancing part (33; 330, 320) and the lifting part (31, 32; 310) are unlocked from one another.

3. Valve actuator according to claim 2, wherein the locking means (321, 331, 4; 3110, 3210, 210) comprise external teeth (331; 3110) arranged on the outside of the balancing part (33; 330, 320) and inner teeth (321; 3210) arranged on the inside of the lifting part (31, 32; 310), wherein the external teeth (331; 3110) and the internal teeth (321; 3210) engage with one another when the balancing part (33; 330, 320) and the lifting part (31, 32; 310) are locked together.

4. Valve actuator according to any of the preceding claims, wherein the locking means (321, 331, 4; 3110, 3210, 210) comprise an activating unit (4; 210) for activating the locking.

5. Valve actuator according to claim 3 and 4, wherein the outside of the balancing part (33; 330, 320) comprises areas with external teeth (331; 3110) and areas without external teeth (333) arranged alternately in circumferential direction and wherein the inside of the lifting part (31, 32; 310) comprises areas with inner teeth (321; 3210) and areas without inner teeth (321; 3210) arranged alternately in circumferential direction, wherein the lifting part (31, 32; 310) and the balancing part (33; 330, 320) can be moved relative to one another by the activating unit (4; 210) from an unlocked position, in which the outer teeth (331; 3110) are adjacent to areas without inner teeth and the inner teeth (321; 3210) are adjacent to areas without outer teeth (333), to a locked position in which the outer teeth (331; 3110) and the inner teeth (321; 3210) engage with one another.

6. Valve actuator according to any of the preceding claims, which comprises a pretensioning device (2; 20) by means of which the lifting element (3; 30) can be moved in lifting direction against the force of the pressure element (7; 70), wherein the pretensioning device (2; 20) comprises a fixing element (22; 2120), by means of which the lifting element (3; 30) can be fixed in a position in which the pressure element (7; 70) is pretensioned.

7. Valve actuator according to any of the preceding claims, wherein the pressure element (7) is connected functionally to the lifting part (31, 32) and which comprises an additional pressure element (8) which is connected functionally to the balancing part (33), wherein the additional pressure element (8) is arranged so that a force acts against the lifting direction on the balancing part (33).

8. Valve actuator according to any of claims 1 to 6, wherein the pressure element (70) is connected functionally to the balancing part (330, 320) and which comprises an additional pressure element (70), which is connected functionally to the lifting part (310), wherein the additional pressure element (70) is arranged so that a force acts against the lifting direction on the lifting part (310).

9. Valve actuator according to any of the preceding claims, which comprises a housing (1) with an opening or a window, by means of which the position of the lifting element (3; 30) can be viewed from outside the housing (1).

10. Valve actuator according to claim 9, the housing (1) of which is produced by means of a two-component injection method from a transparent plastic and a non-transparent plastic, wherein the window is formed by the transparent plastic.

## Revendications

1. Entraînement de valve pour actionner une valve (9) par une tige de commande (91) mobile le long de son axe longitudinal, comportant un élément de levage (3 ; 30) pouvant être relié de manière fonctionnelle à la tige de commande (91), un élément de pression (7 ; 70) agissant sur l'élément de levage (3 ; 30) et un actionneur (6 ; 60), dans lequel l'élément de levage (3 ; 30) est mobile dans une direction de levage au moyen de l'actionneur (6 ; 60) et l'élément de pression (7 ; 70) est agencé de telle sorte qu'une force agit sur l'élément de levage (3 ; 30) en sens opposé à la direction de levage, **caractérisé en ce que** l'élément de levage (3 ; 30) comprend une partie de compensation (33 ; 330, 320) pouvant être reliée de manière fonctionnelle à la tige de commande (91) et une partie de levage (31, 32 ; 310) pouvant être reliée de manière fonctionnelle à l'actionneur (6 ; 60), la partie de compensation (33 ; 330, 320) et la partie de levage (31, 32 ; 310) pouvant être verrouillées l'une à l'autre et déverrouillées l'une de l'autre dans différentes positions en direction de levage par des moyens de verrouillage (321, 331, 4 ; 3110, 3210, 210).

2. Entraînement de valve selon la revendication 1, dans lequel la partie de levage (31, 32 ; 310) enferme au moins partiellement la partie de compensation (33 ; 330, 320), de sorte que la partie de compensation (33 ; 330, 320) est mobile dans la partie de levage (31, 32 ; 310) lorsque la partie de compensation (33 ; 330, 320) et la partie de levage (31, 32 ; 310) sont déverrouillées l'une de l'autre.

3. Entraînement de valve selon la revendication 2, dans lequel les moyens de verrouillage (321, 331, 4 ; 3110, 3210, 210) comprennent des dents extérieures (331 ; 3110) agencées sur un côté extérieur de la partie de compensation (33 ; 330, 320) et des dents intérieures (321 ; 3210) agencées sur un côté intérieur de la partie de levage (31, 32 ; 310), les dents extérieures (331 ; 3110) et les dents intérieures (321 ; 3210) s'engageant les unes dans les autres lorsque la partie de compensation (33 ; 330, 320) et la partie de levage (31, 32 ; 310) sont verrouillées l'une à l'autre.

4. Entraînement de valve selon l'une des revendications précédentes, dans lequel les moyens de verrouillage (321, 331, 4 ; 3110, 3210, 210) comprennent une unité d'actionnement (4 ; 210) pour actionner le verrouillage.

5. Entraînement de valve selon la revendication 3 et 4, dans lequel le côté extérieur de la partie de compensation (33 ; 330, 320) comprend des zones pourvues des dents extérieures (331 ; 3110) et des zones dépourvues des dents extérieures (333), qui sont agencées mutuellement en alternance en direction périphérique, et le côté intérieur de la partie de levage (31, 32 ; 310) comprend des zones pourvues des dents intérieures (321 ; 3210) et des zones dépourvues des dents intérieures (321 ; 3210), qui sont agencées mutuellement en alternance en direction périphérique, et par l'intermédiaire de l'unité d'actionnement (4 ; 210), la partie de levage (31, 32 ; 310) et la partie de compensation (33 ; 330, 320) sont mobiles l'une par rapport à l'autre depuis une position déverrouillée dans laquelle les dents extérieures (331 ; 3110) sont au voisinage des zones dépourvues des dents intérieures, et les dents intérieures (321 ; 3210) sont au voisinage des zones dépourvues des dentes extérieures (333), jusque dans une position verrouillée dans laquelle les dents extérieures (331 ; 3110) et les dents intérieures (321 ; 3210) s'engagent les unes dans les autres.

6. Entraînement de valve selon l'une des revendications précédentes, comprenant un moyen de précontrainte (2 ; 20) par lequel l'élément de levage (3 ; 30) est mobile en direction de levage à l'encontre de la force de l'élément de pression (7 ; 70), le moyen de précontrainte (2 ; 20) comprenant un élément de fixation (22 ; 210) au moyen duquel l'élément de levage (3 ; 30) peut être fixé dans une position dans laquelle l'élément de pression (7 ; 70) est précontraint.

7. Entraînement de valve selon l'une des revendications précédentes, dans lequel l'élément de pression (7) est relié de manière fonctionnelle à la partie de levage (31, 32), et qui comprend un autre élément de pression (8) qui est relié de manière fonctionnelle à la partie de compensation (33), l'autre élément de pression (8) étant agencé de telle sorte qu'une force agit sur la partie de compensation (33) en sens opposé à la direction de levage.

8. Entraînement de valve selon l'une des revendications 1 à 6, dans lequel l'élément de pression (70) est relié de manière fonctionnelle à la partie de compensation (330, 320), et qui comprend un autre élément de pression (70) qui est relié de manière fonctionnelle à la partie de levage (310), l'autre élément de pression (70) étant agencé de telle sorte qu'une force agit sur la partie de levage (310) en sens opposé à la direction de levage.

9. Entraînement de valve selon l'une des revendications précédentes, comprenant un boîtier (1) pourvu d'une ouverture ou d'une fenêtre au moyen de laquelle la position de l'élément de levage (3 ; 30) est visible depuis l'extérieur du boîtier (1).

10. Entraînement de valve selon la revendication 9, dont le boîtier (1) est réalisé en une matière plastique transparente et en une matière plastique non transparente par un procédé d'injection à deux composants, la fenêtre étant formée par la matière plastique transparente.
